# EUROPÄISCHE PATENTANMELDUNG

(11) **EP 4 286 929 A1**
(43) Veröffentlichungstag der Anmeldung: **06.12.2023**
(21) Anmeldenummer: 23170170.7
(22) Anmeldetag: 26.04.2023
(51) Int. Cl.: G02F 1/13357

(54) **ANZEIGEVORRICHTUNG UND FORTBEWEGUNGSMITTEL**

(30) Priorität: 01.06.2022 DE 102022205568
(71) Anmelder: Continental Automotive Technologies GmbH, 30165 Hannover (DE)
(72) Erfinder: Joseph, Manrico, 60488 Frankfurt am Main (DE); Jekel, Martin, 60488 Frankfurt am Main (DE)
(74) Vertreter: Continental Corporation

(57) **Zusammenfassung**

Die vorliegende Erfindung betrifft eine Anzeigevorrichtung (1) sowie ein Fortbewegungsmittel mit einer solchen Anzeigevorrichtung (1). Die Anzeigevorrichtung (1) weist ein Anzeigepaneel und eine Hintergrundbeleuchtung (3) für das Anzeigepaneel auf. Die Hintergrundbeleuchtung (3) weist einen Reflektor (30) mit einer Vielzahl von regelmäßig geformten und in einem Raster angeordneten reflektierend ausgestalteten Kavitäten (31) auf. In zumindest einem Randbereich (300) weist der Reflektor (30) unregelmäßig geformte reflektierend ausgestaltete Kavitäten (31') auf. Zudem weist die Hintergrundbeleuchtung (3) eine Vielzahl von jeweils in den Kavitäten (31) angeordneten Lichtquellen (32, 32') auf.

## Beschreibung

Die vorliegende Erfindung betrifft eine Anzeigevorrichtung sowie ein Fortbewegungsmittel mit einer solchen Anzeigevorrichtung.

Anzahl und Fläche von Anzeigevorrichtungen in Fortbewegungsmitteln steigen ständig an. Anzeigevorrichtungen sind beispielsweise als Kombiinstrument für den Fahrer, als Zentraldisplay und auch als Beifahrerdisplay im Markt anzutreffen. Nicht-selbstleuchtende transmissive Anzeigevorrichtung benötigen zur Bilddarstellung eine Hintergrundbeleuchtung. Die Aufgabe der Hintergrundbeleuchtung ist es dabei, das verwendete Anzeigepaneel so gleichförmig wie möglichst über die gesamte aktive Fläche zu beleuchten, um eine möglichst homogene Anzeige bis in den Randbereich zu erzeugen.

Matrix-Hintergrundbeleuchtungen nutzen eine Vielzahl von in einer Matrix angeordneten Lichtquellen zur Lichterzeugung. Mittels eines Reflektors wird das Licht der Lichtquellen dabei in Richtung des Anzeigepaneels gelenkt.

Beispielsweise beschreibt US 2005/0276069 A1 eine Flüssigkristallanzeige mit einer Diffusionsplatte oder einer Prismenplatte, die zwischen einem Flüssigkristallpanel und einer Vielzahl von Lichtemissionsabschnitten angeordnet ist. Jeder Lichtemissionsabschnitt wird durch einen optischen Leiter und eine oder mehrere lichtemittierende Vorrichtungen gebildet. Der optische Leiter hat eine in einem Substrat ausgebildete Lichtreflexionsfläche und eine Lichtübertragungsfläche, die in engen Kontakt mit der Lichtreflexionsfläche gebracht wird.

DE 10 2007 007 353 A1 beschreibt eine Beleuchtungseinrichtung mit einer Leuchtfläche, die aus einer Vielzahl von Strahlungsreflektoren modulartig zusammensetzbar ist. Vorzugsweise werden wabenförmige, schuppenförmige, dreieckförmige oder rechteckförmige Strahlungsreflektoren verwendet. Jeder der Strahlungsreflektoren weist mehrere strahlungsreflektierende Flächen auf, die, von einem Zentrum ausgehend, in dem eine Lichtquelle angeordnet ist, nach außen gewölbt sind.

In zunehmendem Maße kommen Freiform-Anzeigevorrichtungen zum Einsatz, d.h. Anzeigevorrichtungen, deren Form von der klassischen Rechteckform abweicht. Bei solchen Anzeigevorrichtungen besteht eine Problematik darin, dass die Matrix-Hintergrundbeleuchtung den gesamten Anzeigebereich homogen ausleuchten muss. An den frei geformten Rändern des Anzeigebereichs erstreckt sich die Matrix-Hintergrundbeleuchtung deshalb teils über den eigentlichen Anzeigebereich hinaus. Um einen Lichtaustritt außerhalb des Anzeigebereichs zu vermeiden, wird in solchen Fällen in der Regel ein Schwarzdruck auf einem Deckglas der Anzeigevorrichtung verwendet. Dies führt zu einem Zielkonflikt, wenn die Anzeigevorrichtung möglichst randlos ausgeführt werden soll.

Es ist eine Aufgabe der Erfindung, eine verbesserte Anzeigevorrichtung mit einer Matrix-Hintergrundbeleuchtung bereitzustellen.

Diese Aufgabe wird durch eine Anzeigevorrichtung mit den Merkmalen des Anspruchs 1 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung weist eine Anzeigevorrichtung ein Anzeigepaneel und eine Hintergrundbeleuchtung für das Anzeigepaneel auf, wobei die Hintergrundbeleuchtung aufweist:
- einen Reflektor mit einer Vielzahl von regelmäßig geformten und in einem Raster angeordneten reflektierend ausgestalteten Kavitäten, wobei der Reflektor in zumindest einem Randbereich unregelmäßig geformte reflektierend ausgestaltete Kavitäten aufweist; und
- eine Vielzahl von jeweils in den Kavitäten angeordneten Lichtquellen.

Bei der erfindungsgemäßen Lösung ist ein Reflektor zwischen den Lichtquellen und dem Anzeigepaneel angeordnet, der die bauartbedingte Lücke zwischen den Lichtquellen und dem Anzeigepaneel oder einer weiteren unterhalb des Anzeigepaneels angeordneten optischen Komponente füllt. Dieser Reflektor weist eine Vielzahl von reflektierend ausgestalteten Kavitäten auf, in denen jeweils eine Lichtquelle angeordnet ist. Die Kavitäten orientieren das aus den Lichtquellen austretende Licht in Richtung des Anzeigepaneels. Die Kavitäten sind regelmäßig geformt und in einem Raster angeordnet. In den Randbereichen sind die Kavitäten hingegen zumindest teilweise unregelmäßig geformt und an die Freiform des Anzeigepaneels angenähert. Dies erlaubt es, den erforderlichen Bauraum für die Hintergrundbeleuchtung zu reduzieren.

Gemäß einem Aspekt der Erfindung weicht die Anordnung der Kavitäten in dem zumindest einen Randbereich vom Raster ab. Zusätzlich zur Verwendung unregelmäßig geformter Kavitäten besteht die Möglichkeit, in den betroffenen Randbereichen bei der Anordnung der Kavitäten vom Raster abzuweichen. Dies erlaubt eine noch einmal verbesserte Annäherung der Hintergrundbeleuchtung an die Freiform des Anzeigepaneels.

Gemäß einem Aspekt der Erfindung weicht eine Anordnung der Lichtquellen in dem zumindest einen Randbereich vom Raster ab. In den regelmäßig geformten und im Raster angeordneten Kavitäten sind die Lichtquellen normalerweise jeweils im Zentrum einer Kavität angeordnet, d.h. auch die Lichtquellen sind im Raster angeordnet. Indem in den betroffenen Randbereichen von dieser Anordnung der Lichtquellen im Raster abgewichen wird, kann auch für unregelmäßig geformte Kavitäten eine homogene Ausleuchtung erzielt werden.

Gemäß einem Aspekt der Erfindung weist der Reflektor in dem zumindest einen Randbereich verbundene Kavitäten auf, in denen jeweils zwei oder mehr Lichtquellen angeordnet sind. Es gibt somit Bereiche im Reflektor, die gezielt nicht vollständig in Kavitäten mit genau einer Lichtquelle getrennt sind. Dies führt dazu, dass die entsprechenden Bereiche des Anzeigepaneels von mehreren Lichtquellen ausgeleuchtet werden, was für einen Ausgleich der unterschiedlich großen Kavitäten und somit für eine homogenere Ausleuchtung sorgt. Wäre eine Wand zwischen den verbundenen Kavitäten vorhanden, würde weniger Licht im zugehörigen Bereich des Anzeigepaneels ankommen und der Bereich würde dunkler erscheinen.

Gemäß einem Aspekt der Erfindung weisen die in den regelmäßig geformten Kavitäten angeordneten Lichtquellen und die in den unregelmäßig geformten Kavitäten angeordneten Lichtquellen unterschiedliche Leuchtstärken auf. Auch auf diese Weise kann eine homogene Ausleuchtung des Anzeigepaneels erzielt werden. In unregelmäßig geformten Kavitäten, die größer als die regelmäßig geformten Kavitäten sind, werden Lichtquellen mit größerer Leuchtstärke verwendet. Dementsprechend werden in unregelmäßig geformten Kavitäten, die kleiner als die regelmäßig geformten Kavitäten sind, Lichtquellen mit geringerer Leuchtstärke verwendet. Die Anpassung der Leuchtstärke kann durch den Einbau unterschiedlicher Typen von Lichtquellen oder durch eine geeignete Ansteuerung der Lichtquellen realisiert werden.

Gemäß einem Aspekt der Erfindung weisen die regelmäßig geformten Kavitäten eine Grundfläche in Form eines Dreiecks, Rechtecks oder Sechsecks auf. Die regelmäßig geformten Kavitäten bilden somit ein Dreieckgitter, ein Rechteckgitter oder ein Hexagonalgitter. Der Reflektor kann auf verschiedene Weise ausgestaltet sein. Die Verwendung dreieckiger, rechteckiger oder sechseckiger Kavitäten erlaubt es, den Reflektor aus einer lückenlosen Matrix von Kavitäten zu bilden.

Gemäß einem Aspekt der Erfindung sind Wände der Kavitäten verrundetet und die Kavitäten sind ausgestaltet, das von den Lichtquellen emittierte Licht in Richtung des Anzeigepaneels zu reflektieren. Durch die Verrundung kann das emittierte Licht gezielter in Richtung des Anzeigepaneels reflektiert werden.

Gemäß einem Aspekt der Erfindung sind die Lichtquellen seitlich emittierende Leuchtdioden. Die Verwendung von seitlich emittierenden Leuchtdioden hat den Vorteil, dass eine Ausbildung von Lichtspots in der Hintergrundbeleuchtung verhindert wird. Diese sorgt für eine besonders homogen wirkende Beleuchtung des Anzeigepaneels.

Gemäß einem Aspekt der Erfindung emittieren die seitlich emittierenden Leuchtdioden allseitig Licht. Dies sorgt für eine zusätzliche Steigerung der Homogenität der Ausleuchtung des Anzeigepaneels.

Vorzugsweise wird eine erfindungsgemäße Anzeigevorrichtung in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch eine Freiform-Anzeigevorrichtung;
- Fig. 2: zeigt schematisch einen Querschnitt durch die Anzeigevorrichtung aus Fig. 1;
- Fig. 3: zeigt schematisch eine Detailansicht der Anzeigevorrichtung;
- Fig. 4: zeigt schematisch eine bekannte Hintergrundbeleuchtung;
- Fig. 5: zeigt schematisch eine erste Ausführungsform einer erfindungsgemäßen Hintergrundbeleuchtung;
- Fig. 6: zeigt schematisch eine Detailansicht der Hintergrundbeleuchtung aus Fig. 5;
- Fig. 7: zeigt schematisch eine Detailansicht eines Reflektors der Hintergrundbeleuchtung aus Fig. 5;
- Fig. 8: zeigt schematisch eine Detailansicht einer zweiten Ausführungsform einer erfindungsgemäßen Hintergrundbeleuchtung;
- Fig. 9: zeigt schematisch eine Detailansicht einer dritten Ausführungsform einer erfindungsgemäßen Hintergrundbeleuchtung;
- Fig. 10: zeigt schematisch eine Detailansicht einer vierten Ausführungsform einer erfindungsgemäßen Hintergrundbeleuchtung; und
- Fig. 11: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

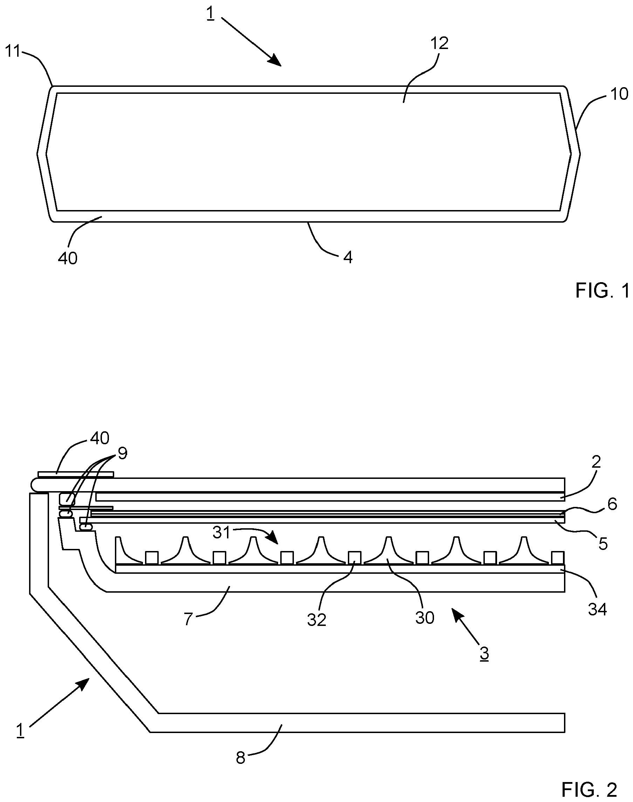

Fig. 1 zeigt schematisch eine Freiform-Anzeigevorrichtung 1. Die Anzeigevorrichtung 1 weist keine klassische Rechteckform auf, sondern hat abgeschrägte Seiten 10 und abgerundete Ecken 11. Um einen Lichtaustritt von Licht einer Hintergrundbeleuchtung außerhalb des Anzeigebereichs 12 zu vermeiden, ist ein Deckglas 4 der Anzeigevorrichtung 1 mit einem Schwarzdruck 40 versehen.
Fig. 2 zeigt schematisch einen Querschnitt durch die Anzeigevorrichtung 1 aus Fig. 1. Die Anzeigevorrichtung 1 weist ein Anzeigepaneel 2 auf, das mit einem Deckglas 4 verklebt ist. Das Deckglas 4 schließt ein Gehäuse 8 der Anzeigevorrichtung 1 gegenüber der Umgebung ab und ist mit einem Schwarzdruck 40 versehen. In einem weiteren Gehäuse 7 ist eine Hintergrundbeleuchtung 3 für das Anzeigepaneel 2 angeordnet. Die Hintergrundbeleuchtung 3 weist einen Reflektor 30 mit einer Vielzahl von Kavitäten 31 auf. In den Kavitäten 31 ist jeweils eine Lichtquelle 32 angeordnet, typischerweise eine Leuchtdiode. Die Lichtquellen 32 sind auf einer Leiterplatte 34 angeordnet, die mit dem Gehäuse 7 der Hintergrundbeleuchtung 3 verklebt sein kann. Zwischen der Hintergrundbeleuchtung 3 und dem Anzeigepaneel 2 befindet sich im dargestellten Beispiel eine optische Platte 5 mit einem darauf angeordneten Folienstapel 6. Die Folien des optischen Folienstapels 6 haben die Aufgabe, das Licht aus dem Reflektor 30 so zu streuen, zu sammeln oder zu richten, dass die Anforderungen an die Raumwinkel der Hintergrundbeleuchtung 3 erfüllt werden. Typische Folien zur Lichtausrichtung sind Helligkeitsverbesserungsfilme (engl. Brightness Enhancement Film, BEF) und Lichtkontrollfilme (engl. Light Control Film, LCF). Bei der optischen Platte 5 handelt es sich um eine transparente Platte, die den optischen Abstand zwischen dem optischen Folienstapel 6 und den Lichtquellen 32 sicherstellt. Das Deckglas 4, die optische Platte 5 und das Gehäuse 7 der Hintergrundbeleuchtung 3 sind durch geeignete Verbindungselemente 9, z.B. Verklebungen, miteinander verbunden.

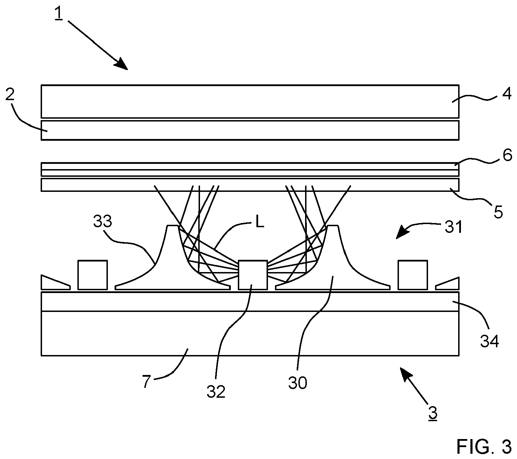

Fig. 3 zeigt schematisch eine Detailansicht der Anzeigevorrichtung 1. Zu sehen sind das Deckglas 4 mit dem Anzeigepaneel 2, die optische Platte 5 mit dem Folienstapel 6 und die Hintergrundbeleuchtung 3 mit dem Gehäuse 7, der Leiterplatte 34 mit den darauf angeordneten Lichtquellen 32 und dem Reflektor 30. Bei den Lichtquellen 32 handelt es sich hier um seitlich emittierende Leuchtdioden, die vorzugsweise allseitig Licht L emittieren. Die reflektierend ausgestalteten Wände 33 der Kavitäten 31 des Reflektors 30 sind verrundet ausgestaltet und orientieren das aus den Lichtquellen 32 austretende Licht L in Richtung des Anzeigepaneels 2. In einer exemplarischen Ausgestaltung liegt die gesamte Aufbauhöhe der Anzeigevorrichtung 1 vorzugsweise im Bereich von ~13,3 mm. Die Höhe des Reflektors 30 kann ~3,72 mm betragen, die Breite der Wände 33 an ihrer breitesten Stelle ~6,13 mm. Der Abstand zwischen dem Folienstapel 6 und dem Anzeigepaneel 2 beträgt ~1,31 mm, der Abstand zwischen dem Reflektor 30 und der optischen Platte 5 liegt bei ~1,05 mm. Der Abstand zwischen den Lichtquellen 32 kann z.B. ~9,13 mm betragen.

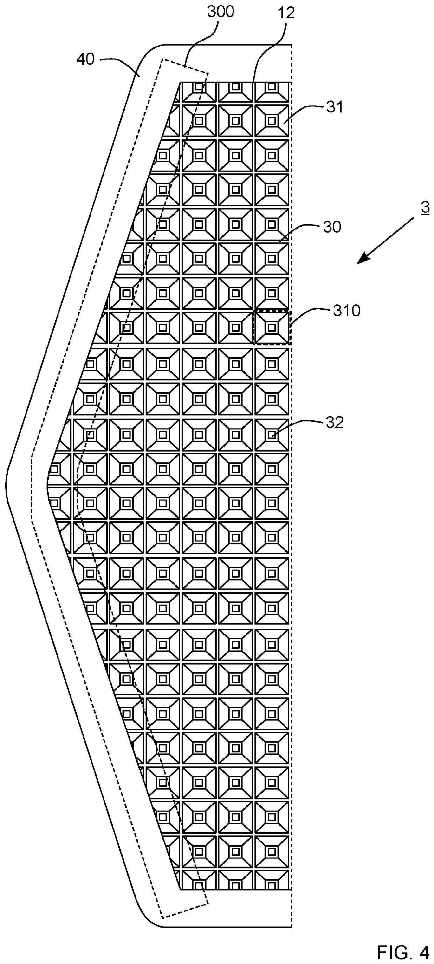

Fig. 4 zeigt schematisch eine bekannte Hintergrundbeleuchtung 3 für die Anzeigevorrichtung 1 aus Fig. 1. Die Hintergrundbeleuchtung 3 weist einen Reflektor 30 mit einer Vielzahl von regelmäßig geformten reflektierend ausgestalteten Kavitäten 31 auf, die in einem Raster angeordnet sind. In den Kavitäten 31 ist jeweils eine Lichtquelle 32 angeordnet. Im dargestellten Beispiel haben die Kavitäten 31 eine rechteckige Grundfläche 310 und sind in einem Rechteckraster angeordnet. In den Randbereichen 300 der Hintergrundbeleuchtung 3 erstrecken sich die Kavitäten 31 teils über den eigentlichen Anzeigebereich 12 hinaus. Ein Lichtaustritt in diesen Bereichen wird durch einen Schwarzdruck 40 verhindert, der zur Verdeutlichung in Fig. 4 ebenfalls dargestellt ist, auch wenn er nicht Bestandteil der Hintergrundbeleuchtung 3 ist.

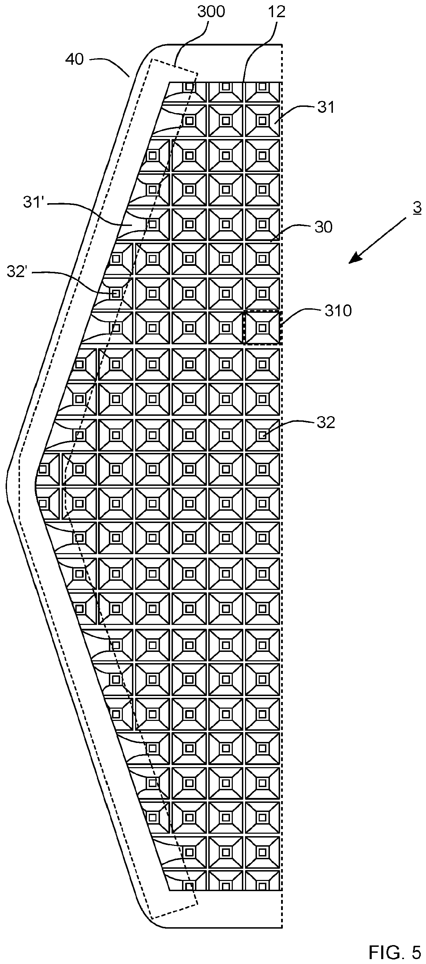

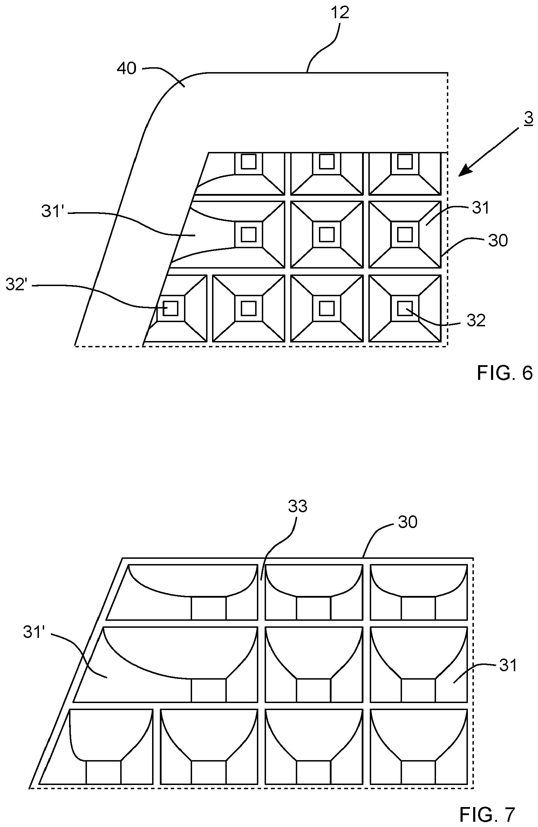

Fig. 5 zeigt schematisch eine erste Ausführungsform einer erfindungsgemäßen Hintergrundbeleuchtung 3. Fig. 6 zeigt schematisch eine Detailansicht der Hintergrundbeleuchtung 3. Die erfindungsgemäße Hintergrundbeleuchtung 3 zeichnet sich gegenüber der bekannten Ausführung aus Fig. 4 dadurch aus, dass die Kavitäten 31' des Reflektors 30 in den Randbereichen 300 eine abweichende Ausgestaltung aufweisen. Die Kavitäten 31' in den Randbereichen 300 sind zumindest teilweise unregelmäßig geformt und weichen in der Größe von den regelmäßig geformten Kavitäten 31 ab. Dies erlaubt es, den erforderlichen Bauraum für die Hintergrundbeleuchtung 3 zu reduzieren, da sich die Kavitäten 31' im Randbereich 300 in einem verringerten Maße über den eigentlichen Anzeigebereich 12 hinaus erstrecken und der Schwarzdruck 40 daher schmaler ausfallen kann. Die unregelmäßig geformten Kavitäten 31' können sowohl größer als auch kleiner als die regelmäßig geformten Kavitäten 31 sein. Wie in Fig. 5 und Fig. 6 gut zu sehen ist, sind die Lichtquellen 32, 32' weiterhin in einem Raster angeordnet. Um trotz der unterschiedliche großen Kavitäten 31 31' eine homogene Ausleuchtung des Anzeigepaneels zu erzielen, können die Lichtquellen 32 in den regelmäßig geformten Kavitäten 31 und die Lichtquellen 32' in den unregelmäßig geformten Kavitäten 31' unterschiedliche Leuchtstärken aufweisen. In Fig. 5 und Fig. 6 weisen die regelmäßig geformten Kavitäten 31 eine rechteckige Grundfläche 310 auf. Die Grundfläche 310 kann aber auch andere Formen haben, beispielsweise die Form eines Dreiecks oder Sechsecks.
Fig. 7 zeigt schematisch eine Detailansicht eines Reflektors 30 der Hintergrundbeleuchtung aus Fig. 5. Gut zu sehen ist, dass die Ausgestaltung der Kavitäten 31'an die Freiform des Anzeigepaneels angenähert ist. Zudem ist deutlich eine ausgerundete Form der Wände 33 der Kavitäten 31, 31' zu erkennen. Durch die Verrundung kann das emittierte Licht von den Wänden 33 gezielter in Richtung des Anzeigepaneels reflektiert werden.

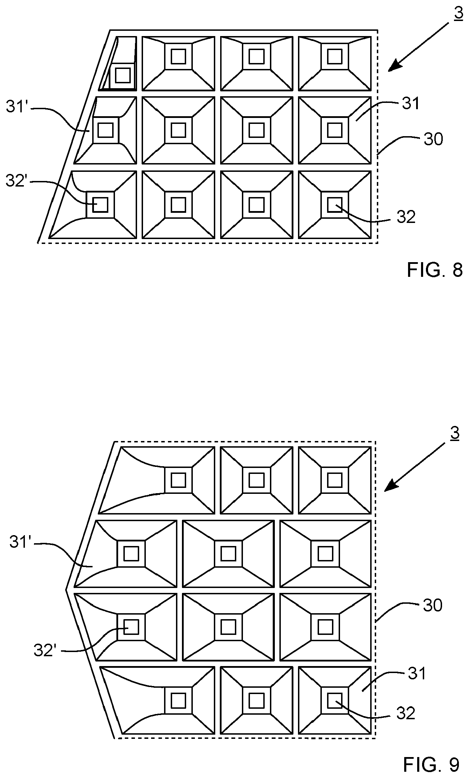

Fig. 8 schematisch eine Detailansicht einer zweiten Ausführungsform einer erfindungsgemäßen Hintergrundbeleuchtung 3. Auch bei dieser Ausführungsform sind im Randbereich zumindest teilweise unregelmäßig geformte Kavitäten 31' vorgesehen, die in der Größe von den regelmäßig geformten Kavitäten 31 abweichen. Der Schwarzdruck ist in dieser Figur nicht dargestellt, um die verschiedenen Formen der unregelmäßig geformte Kavitäten 31' besser sichtbar zu machen. Gut zu erkennen ist, dass die unregelmäßig geformte Kavitäten 31' teils größer und teils kleiner sind als die regelmäßig geformten Kavitäten 31. Zusätzlich weicht bei dieser Ausführungsform auch die Anordnung der Lichtquellen 32' im Randbereich vom Raster ab. Auf diese Weise kann auch mit unregelmäßig geformten Kavitäten 31' eine besonders homogene Ausleuchtung erzielt werden.
Fig. 9 zeigt schematisch eine Detailansicht einer dritten Ausführungsform einer erfindungsgemäßen Hintergrundbeleuchtung 3. Auch bei dieser Ausführungsform sind im Randbereich zumindest teilweise unregelmäßig geformte Kavitäten 31' vorgesehen, die in der Größe von den regelmäßig geformten Kavitäten 31 abweichen. Die unregelmäßig geformten Kavitäten 31' können sowohl größer als auch kleiner als die regelmäßig geformten Kavitäten 31 sein. Zusätzlich weicht bei dieser Ausführungsform sowohl die die Anordnung der Lichtquellen 32' im Randbereich als auch die Anordnung der Kavitäten 31, 31' im Randbereich vom Raster ab. Dies erlaubt eine noch einmal verbesserte Annäherung der Hintergrundbeleuchtung 3 an die Freiform des Anzeigepaneels.

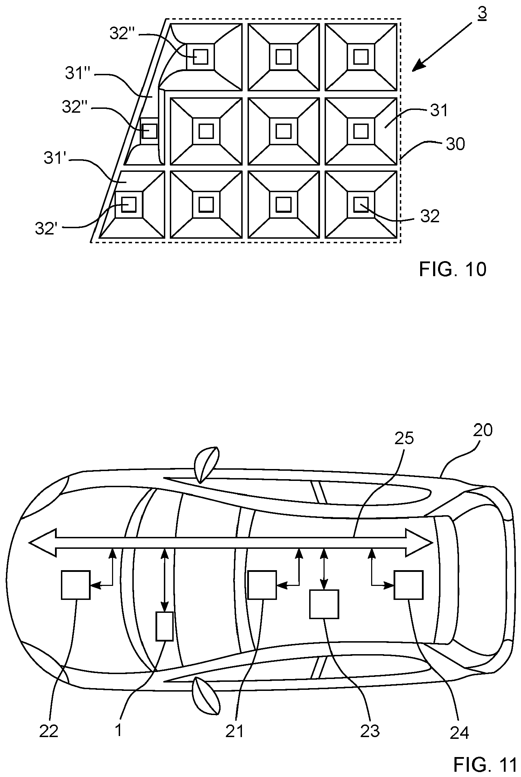

Fig. 10 zeigt schematisch eine Detailansicht einer vierten Ausführungsform einer erfindungsgemäßen Hintergrundbeleuchtung 3. Auch bei dieser Ausführungsform sind im Randbereich zumindest teilweise unregelmäßig geformte Kavitäten 31' vorgesehen, die in der Größe von den regelmäßig geformten Kavitäten 31 abweichen. Die unregelmäßig geformten Kavitäten 31' können sowohl größer als auch kleiner als die regelmäßig geformten Kavitäten 31 sein. Zusätzlich sind im Randbereich verbundene Kavitäten 31" vorgesehen, in denen jeweils zwei oder mehr Lichtquellen 32" angeordnet sind. Es gibt somit Bereiche im Reflektor 30, die gezielt nicht vollständig in Kavitäten 31, 31' mit genau einer Lichtquelle 32, 32' getrennt sind. Dies führt dazu, dass die entsprechenden Bereiche des Anzeigepaneels von mehreren Lichtquellen 32" ausgeleuchtet werden, was für einen Ausgleich der unterschiedlich großen Kavitäten 32" und somit für eine homogenere Ausleuchtung sorgt.
Fig. 11 zeigt schematisch ein Fortbewegungsmittel 20, das eine erfindungsgemäße Anzeigevorrichtung 1 nutzt. Bei dem Fortbewegungsmittel 20 handelt es sich in diesem Beispiel um ein Kraftfahrzeug. Das Kraftfahrzeug weist eine erfindungsgemäße Anzeigevorrichtung 1 auf, die in einer Armaturentafel angeordnet ist. Mit einer Sensorik 21 können Daten zur Fahrzeugumgebung erfasst werden. Die Sensorik 21 kann insbesondere Sensoren zur Umfelderkennung umfassen, z.B. Ultraschallsensoren, Laserscanner, Radarsensoren, Lidarsensoren oder Kameras. Die von der Sensorik 21 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 22, durch das Positionsinformationen bereitgestellt werden können, sowie eine Datenübertragungseinheit 23. Mittels der Datenübertragungseinheit 23 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 24 vorhanden. Der Datenaustausch zwischen den verschiedenen Komponenten des Kraftfahrzeugs erfolgt über ein Netzwerk 25.

### Bezugszeichenliste

- 1: Anzeigevorrichtung
- 2: Anzeigepaneel
- 3: Hintergrundbeleuchtung
- 30: Reflektor
- 300: Randbereich
- 31: Regelmäßig geformte Kavität
- 31': Unregelmäßig geformte Kavität
- 31": Verbundene Kavität
- 32, 32': Lichtquelle
- 32" 33: Wand
- 34: Leiterplatte
- 4: Deckglas
- 40: Schwarzdruck
- 5: Optische Platte
- 6: Folienstapel
- 7: Gehäuse der Hintergrundbeleuchtung
- 8: Gehäuse der Anzeigevorrichtung
- 9: Verbindungselement
- 10: Seite
- 11: Ecke
- 12: Anzeigebereich
- 20: Fortbewegungsmittel
- 21: Sensorik
- 22: Navigationssystem
- 23: Datenübertragungseinheit
- 24: Speicher
- 25: Netzwerk
- L: Licht

## Patentansprüche

1. Anzeigevorrichtung (1) mit einem Anzeigepaneel (2) und einer Hintergrundbeleuchtung (3) für das Anzeigepaneel (2), wobei die Hintergrundbeleuchtung (3) aufweist:
- einen Reflektor (30) mit einer Vielzahl von regelmäßig geformten und in einem Raster angeordneten reflektierend ausgestalteten Kavitäten (31), wobei der Reflektor (30) in zumindest einem Randbereich (300) unregelmäßig geformte reflektierend ausgestaltete Kavitäten (31') aufweist; und
- eine Vielzahl von jeweils in den Kavitäten (31) angeordneten Lichtquellen (32, 32').

2. Anzeigevorrichtung (1) gemäß Anspruch 1, wobei die Anordnung der Kavitäten (31') in dem zumindest einen Randbereich (300) vom Raster abweicht.

3. Anzeigevorrichtung (1) gemäß Anspruch 1 oder 2, wobei eine Anordnung der Lichtquellen (32`) in dem zumindest einen Randbereich (300) vom Raster abweicht.

4. Anzeigevorrichtung (1) gemäß einem der vorherigen Ansprüche, wobei der Reflektor (30) in dem zumindest einen Randbereich (300) verbundene Kavitäten (31") aufweist, in denen jeweils zwei oder mehr Lichtquellen (32") angeordnet sind.

5. Anzeigevorrichtung (1) gemäß einem der vorherigen Ansprüche, wobei die in den regelmäßig geformten Kavitäten (31) angeordneten Lichtquellen (32) und die in den unregelmäßig geformten Kavitäten (31') angeordneten Lichtquellen (32') unterschiedliche Leuchtstärken aufweisen.

6. Anzeigevorrichtung (1) gemäß einem der vorherigen Ansprüche, wobei die regelmäßig geformten Kavitäten (31) eine Grundfläche (310) in Form eines Dreiecks, Rechtecks oder Sechsecks aufweisen.

7. Anzeigevorrichtung (1) gemäß einem der vorherigen Ansprüche, wobei Wände (33) der Kavitäten (31, 31', 31") verrundetet sind und die Kavitäten (31, 31', 31") ausgestaltet sind, das von den Lichtquellen (32, 32', 32") emittierte Licht (L) in Richtung des Anzeigepaneels (2) zu reflektieren.

8. Anzeigevorrichtung (1) gemäß Anspruch 7, wobei die Lichtquellen (32, 32', 32") seitlich emittierende Leuchtdioden sind.

9. Anzeigevorrichtung (1) gemäß Anspruch 8, wobei die seitlich emittierenden Leuchtdioden allseitig Licht (L) emittieren.

10. Fortbewegungsmittel (20) mit einer Anzeigevorrichtung (1) gemäß einem der vorherigen Ansprüche.
